# EUROPÄISCHE PATENTSCHRIFT

(11) **EP 2 061 980 B1**
(45) Veröffentlichungstag und Bekanntmachung des Hinweises auf die Patenterteilung: **03.11.2010**
(21) Anmeldenummer: 07803432.9
(22) Anmeldetag: 12.09.2007
(51) Int. Cl.: F16H 61/00, F16H 57/04, F16H 3/00

(54) **LAGERUNG EINES ANFAHRELEMENTSEITIGEN PUMPENANTRIEBSRADES BEI EINER OFF-AXIS PUMPENANORDNUNG IN EINEM AUTOMATGETRIEBE**
SUPPORT OF A PUMP DRIVE WHEEL ON THE SIDE OF THE STARTING COMPONENT WITH AN OFF-AXIS PUMP ARRANGEMENT IN AN AUTOMATIC TRANSMISSION
MONTAGE D'UN ROUE D'ENTRAÎNEMENT DE POMPE CÔTÉ ÉLÉMENT DE DÉMARRAGE D'UN AGENCEMENT DE POMPE HORS D'AXE DANS UN ENGRENAGE AUTOMATIQUE

(30) Priorität: 14.09.2006 DE 102006043047
(43) Veröffentlichungstag der Anmeldung: 27.05.2009
(73) Patentinhaber: ZF Friedrichshafen AG, 88038 Friedrichshafen (DE)
(72) Erfinder: FISCHER, Manfred, 88677 Markdorf (DE); BEIGANG, Lothar, 88079 Kressbronn (DE); SALM, Andreas, 88131 Bodolz (DE); BRUSSA, Stephan, 88085 Langenargen (DE)
(86) Internationale Anmeldenummer: PCT/EP2007/059581
(87) Internationale Veröffentlichungsnummer: WO 2008/031844

(56) Entgegenhaltungen:
- DE-A1- 4 342 233
- US-A1- 2004 211 174

## Beschreibung

Die vorliegende Erfindung bezieht sich auf die Lagerung eines anfahrelementseitigen Pumpenantriebsrades bei einer Off-Axis Pumpenanordnung in einem Automatgetriebe, insbesondere in einem Doppelkupplungsgetriebe, gemäß dem Oberbegriff des Patentanspruchs 1. Eine entsprechende Lagerung ist aus den Dokumenten US 2004/211174 A1 und DE 4342233 A1 bekannt.

Automatgetriebe weisen zur Hydraulikversorgung der Komponenten, z. B. der Schaltelemente, üblicherweise mechanisch angetriebene Pumpen auf. Hierbei sind die Pumpen in Abhängigkeit vom zur Verfügung stehenden Bauraum und den konstruktiven Gegebenheiten als inline (koaxial zu deren Antrieb angeordnete) Pumpen oder als off axis Pumpen ausgebildet; bei den off axis Pumpen ist die Pumpe parallel zur Antriebswelle des Getriebes angeordnet und wird über einen den Achsversatz ausgleichenden Stirntrieb angetrieben, der nach dem Stand der Technik üblicherweise als geradverzahnte Stirnradstufe mit einem treibenden und einem angetriebenen Rad ausgebildet ist.

Nach dem Stand der Technik sitzt das anfahrelement- oder kupplungsseitige Rad der Stirnradstufe mittels Presssitz auf der Kupplungsnabe, wobei das andere Rad auf der Pumpenwelle angeordnet ist. Die presssitzbedingte Verformung des kupplungsseitigen Zahnrades und die lange Toleranzkette zwischen Kupplungsrad und Pumpenrad über mehrere Bauteile und Gehäuse hinweg führt in nachteiliger Weise zu einem nicht optimalen Zahneingriff an der Stirnradstufe und somit zu starken Verzahnungsgeräuschen.

Des weiteren kann es bei der Montage der Kupplung zu Beschädigungen der Stirnräder kommen, da die Zähne blind eingefädelt werden müssen. Hinzu kommt, dass bei der beschriebenen Anordnung Zwangskräfte, die durch Kupplungsunwuchten entstehen und/oder Verspannungen, bedingt durch die lange Toleranzkette zwischen den Zahnrädern auf das Innere der Pumpe übertragen werden, welche in einem erhöhten Verschleiß von Pumpenbuchsen und Pumpenrädern resultieren können.

Der vorliegenden Erfindung liegt die Aufgabe zugrunde, eine Lagerung des kupplungsseitigen Pumpenantriebsrades bei einer Off-Axis Pumpenanordnung in einem Automatgetriebe, insbesondere in einem Doppelkupplungsgetriebe anzugeben, durch die die erwähnten Nachteile der aus dem Stand der Technik bekannten Konstruktionen vermieden werden.

Diese Aufgabe wird durch die Merkmale des Patentanspruchs 1 gelöst. Weitere erfindungsgemäße Ausgestaltungen und Vorteile gehen aus den Unteransprüchen hervor.

Demnach wird eine Lagerung des kupplungsseitigen Pumpenantriebsrades bei einer Off-Axis Pumpenanordnung in einem Automatgetriebe, insbesondere in einem Doppelkupplungsgetriebe, vorgeschlagen, bei der das kupplungsseitige Pumpenantriebsrad auf der Zentrierplatte der Pumpe gelagert ist, welche auch die Rückwand der Pumpe bildet und in welche üblicherweise auch eine der beiden Buchsen zur Lagerung der Pumpenwelle eingepresst ist.

Hierbei erfolgt die Drehmomentübertragung zwischen der Kupplung und dem kupplungsseitigen Pumpenantriebsrad über eine geschlitzte Kupplungsnabe und einen oder mehrere auf dem kupplungsseitigen Antriebsrad angebrachte Mitnahmefinger. Auf diese Weise werden Zwangs- und Störkräfte von dem Zahnrad und somit auch von der Pumpe ferngehalten; es wird lediglich das Drehmoment übertragen. Des weiteren wird die Toleranzkette zwischen den Zahnrädern und damit die Schwankung des Achsabstandes reduziert, was den Zahneingriff hinsichtlich Geräuschentwicklung und Haltbarkeit positiv beeinflusst. In vorteilhafter Weise ist das kupplungsseitige Pumpenantriebsrad auch akustisch von der Kupplung entkoppelt.

Ein weiterer Vorteil der erfindungsgemäßen Konzeption besteht darin, dass die Pumpenantriebsräder bei der erfindungsgemäßen Lagerung auf der Zentrierplatte vor der Kupplungsmontage vormontiert werden können, wodurch das schwierige Einfädeln des zuvor bereits auf der Kupplung sitzenden Zahnrades in das Gegenzahnrad entfällt.

Im Rahmen einer weiteren Ausführungsform der Erfindung können die beiden Stimräder durch einen Kettenantrieb miteinander wirkverbunden sein, was durch die Entkopplung von den Axialbewegungen der Kupplung ermöglicht wird.

Bei der erfindungsgemäß vorgeschlagenen Lagerung des kupplungsseitigen Pumpenantriebsrades auf der Zentrierplatte ist die unterschiedliche Wärmeausdehnung des Zahnrades aus Stahl zur Zentrierplatte aus Aluminium zu berücksichtigen.

Da aus akustischen Gründen eine Gleitlagerung d.h. eine Entkopplung über einen Schmierfilm vorteilhaft ist, hätte sich bei einer direkten Lagerung des Pumpenantriebsrades auf der Zentrierplatte oder auch bei einer auf die Zentrierplatte aufgepressten Stahlbuchse das Lagerspiel zwischen beiden Teilen über dem Temperaturbereich zu stark verändert.

Gemäß der Erfindung ist in den Innendurchmesser der Zentrierplatte aus Aluminium eine Hülse gepresst, die aus einem Material besteht, welches es einen geringeren Längenausdehnungskoeffizienten als die Zentrierplatte aufweist, wobei die Hülse derart umgeformt ist, dass sie den Außendurchmesser der Zentrierplatte in einem gewissen Abstand zur Außenkontur der Zentrierplatte nochmals konzentrisch umschließt. Der hierbei entstehende Spalt zwischen der Hülse und dem Außendurchmesser der Zentrierplatte ist so ausgelegt, dass über den gesamten Temperaturbereich ein je nach Temperatur mehr oder weniger großer Spalt erhalten bleibt. Der für die Gleitlagerung benötigte Spalt (Gleitlagerspalt) zwischen dem sich drehenden kupplungsseitigen Pumpenantriebsrad und der Hülse bleibt aufgrund der wärmedehnungstechnischen Entkoppelung temperaturunabhängig konstant.

Für den Fall, dass die Zentrierplatte, wie aus dem Stand der Technik bekannt, aus Aluminium hergestellt ist, ist die Hülse vorzugsweise als Stahlhülse ausgebildet.

Die Erfindung wird im folgenden anhand der beigefügten Figuren beispielhaft näher erläutert.

Es zeigen:
- Figur 1: eine schematische Schnittansicht der Anordnung des kupplungsseitigen Pumpenantriebsrades bei einer Off-Axis Pumpenanordnung nach dem Stand der Technik und
- Figur 2: eine schematische Schnittansicht der Anordnung des kupplungsseitigen Pumpenantriebsrades bei einer Off-Axis Pumpenanordnung gemäß der vorliegenden Erfindung und eine Detailansicht der für die Erfindung relevanten Bautei- le.

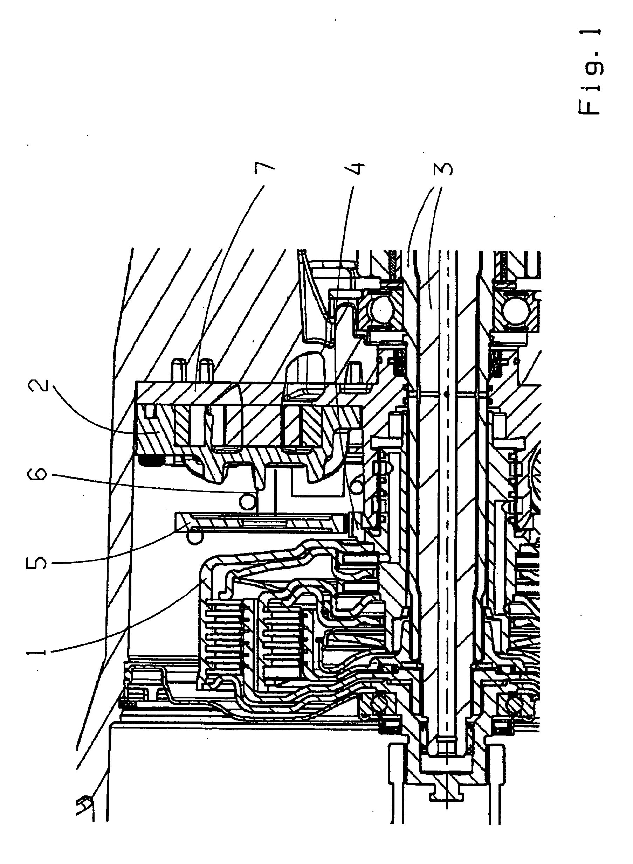

In Figur 1 ist die Doppelkupplung 1 eines Doppelkupplungsgetriebes gezeigt sowie die Pumpe 2, welche parallel zur Antriebswelle 3 des Getriebes angeordnet ist und über einen den Achsversatz ausgleichenden Stirntrieb, umfassend ein kupplungsseitiges treibendes Pumpenantriebsrad 4 und ein pumpenseitiges angetriebenes Zahnrad 5, angetrieben wird. Hierbei ist das kupplungsseitige Pumpenantriebsrad 4 mittels Presssitz auf der Kupplungsnabe angeordnet bzw. auf der Kupplung 1 aufgeschrumpft, wobei das pumpenseitige Rad auf der Pumpenwelle 6 angeordnet ist.

Wie bereits erläutert, führt diese Anordnung zu einem nicht optimalen Zahneingriff an der Stirnradstufe und somit zu starken Verzahnungsgeräuschen. Um dieses Problem zu lösen, wird gemäß der Erfindung vorgeschlagen, das kupplungsseitige Pumpenantriebsrad 4 auf der Zentrierplatte 7 der Pumpe 2 zu lagern, welche auch die Rückwand der Pumpe 2 bildet.

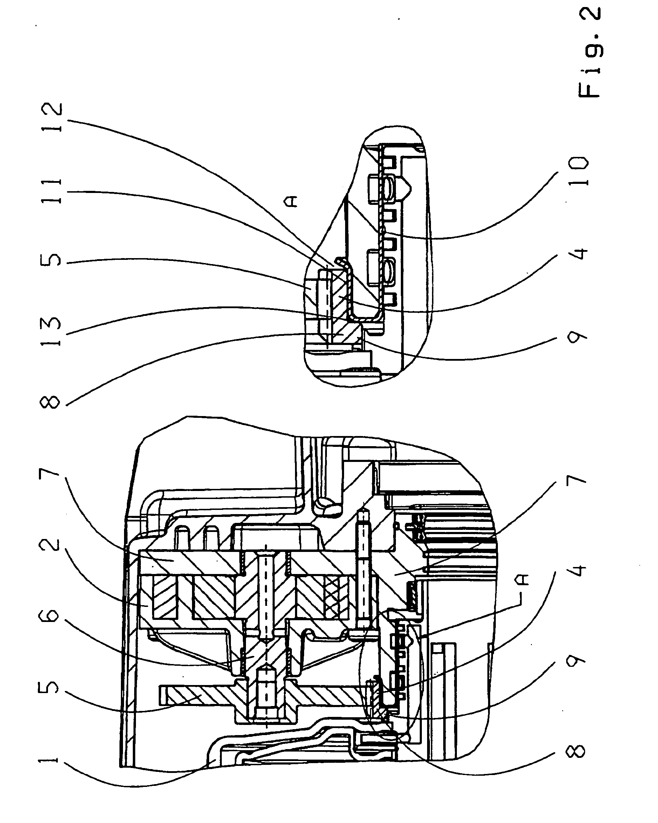

Eine bevorzugte Ausführungsform der Erfindung ist Gegenstand der Figur 2, wobei der rechte Teil der Figur eine Detailansicht des mit dem Kreis A im linken Teil der Figur bezeichneten Bereiches ist. Wie Figur 2 zu entnehmen, ist das kupplungsseitige Pumpenantriebsrad 4 auf der Zentrierplatte 7 der Pumpe 2 gelagert, wobei die Drehmomentübertragung zwischen der Kupplung 1 und dem kupplungsseitigen Pumpenantriebsrad 4 über eine geschlitzte Kupplungsnabe 8 erfolgt, in die ein auf dem kupplungsseitigen Pumpenantriebsrad 4 angebrachter Mitnahmefinger 9 eingreift. Vorzugsweise ist die Lagerung des kupplungsseitigen Pumpenantriebsrades 4 eine Gleitlagerung, welche aus akustischen Gründen sehr vorteilhaft ist.

Wie aus Figur 2 ersichtlich, ist in den Innendurchmesser der Zentrierplatte 7, welche nach dem Stand der Technik aus Aluminium hergestellt ist, eine Stahlhülse 10 gepresst, welche derart umgeformt ist, dass sie den Außendurchmesser der Zentrierplatte 7 in einem gewissen Abstand zur Außenkontur der Zentrierplatte 7 konzentrisch umschließt. Der hierbei entstehende Spalt 11 zwischen der Hülse 10 und dem Außendurchmesser der Zentrierplatte 7 ist so ausgelegt, dass über den gesamten Temperaturbereich ein je nach Temperatur mehr oder weniger großer Spalt erhalten bleibt. Der für die Gleitlagerung benötigte Spalt (Gleitlagerspalt) 13 zwischen dem sich drehenden kupplungsseitigen Pumpenantriebsrad 4 und der Hülse 10 bleibt aufgrund der wärmedehnungstechnischen Entkoppelung temperaturunabhängig konstant.

Im Rahmen einer vorteilhaften Weiterbildung der Erfindung ist vorgesehen, dass die Stahlhülse 10 an ihrem über dem Außendurchmesser der Zentrierplatte 7 vorgesehenen Ende derart umgeformt ist, dass eine Ölauffangrinne 12 gebildet wird, welche der zusätzlichen Schmierölversorgung der Lauffläche zwischen der Hülse 10 und dem Pumpenantriebsrad 4 dient.

Anstelle der Kupplung kann auch ein anderes Anfahrelement, wie z. B. ein hydrodynamischer Drehmomentwandler oder eine E-Maschine, verwendet werden.

Selbstverständlich fällt auch jede konstruktive Ausbildung, insbesondere jede räumliche Anordnung der Bauteile der erfindungsgemäßen Lagerung des kupplungsseitigen Pumpenantriebsrades an sich sowie zueinander und soweit technisch sinnvoll, unter den Schutzumfang der vorliegenden Ansprüche, ohne die Funktion Lagerung des kupplungsseitigen Pumpenantriebsrades, wie sie in den Ansprüchen angegeben ist, zu beeinflussen, auch wenn diese Ausbildungen nicht explizit in den Figuren oder in der Beschreibung dargestellt sind.

### Bezugszeichen

- 1: Kupplung
- 2: Pumpe
- 3: Antriebswelle
- 4: kupplungsseitiges Pumpenantriebsrad
- 5: pumpenseitiges Pumpenantriebsrad
- 6: Pumpenwelle
- 7: Zentrierplatte
- 8: Nabe
- 9: Mitnahmefinger
- 10: Stahlhülse
- 11: Spalt zwischen der Stahlhülse und der Zentrierplatte
- 12: Ölauffangrinne
- 13: Gleitlagerspaft

## Patentansprüche

1. Anordnung einer Pumpe (2) in einem Automatgetriebe, insbesondere Doppelkupplungsgetriebe, wobei die Pumpe parallel achsversetzt zu einer Antriebswelle (3) und einer Kupplung (1) des Getriebes angeordnet ist, wobei die Pumpe über ein kupplungsseitiges, treibendes Pumpenantriebsrad (4) und ein auf einer Pumpenwelle (6) angeordnetes angetriebenes Zahnrad (5) antreibbar ist, **dadurch gekennzeichnet, dass** das kupplungsseitige Pumpenantriebsrad (4) auf einer Zentrierplatte (7) gelagert ist, welche die Rückwand der Pumpe (2) bildet.

2. Anordnung nach Anspruch 1, **dadurch gekennzeichnet, dass** die Drehmomentübertragung zwischen der Kupplung (1) und dem kupplungsseitigen Pumpenantriebsrad (4) über eine geschlitzte Kupplungsnabe (8) erfolgt, in die mindestens ein auf dem kupplungsseitigen Pumpenantriebsrad (4) angebrachter Mitnahmefinger (9) eingreift.

3. Anordnung nach Anspruch 1 oder 2, **dadurch gekennzeichnet, dass** die Lagerung des kupplungsseitigen Pumpenantriebsrades (4) eine Gleitlagerung ist.

4. Anordnung nach Anspruch 3, **dadurch gekennzeichnet, dass** in einen Innendurchmesser der Zentrierplatte (7) eine Hülse (10) aus einem Material gepresst ist, welches einen geringeren Längenausdehnungskoeffizienten als die Zentrierplatte aufweist, wobei die Hülse derart umgeformt ist, dass sie einen Außendurchmesser der Zentrierplatte (7) in einem gewissen Abstand zur Außenkontur der Zentrierplatte (7) konzentrisch umschließt, wobei der für die Gleitlagerung benötigte Gleitlagerspalt (13) zwischen dem sich drehenden kupplungsseitigen Pumpenantriebsrad (4) und der Hülse (10) aufgrund der wärmedehnungstechnischen Entkoppelung temperaturunabhängig konstant bleibt.

5. Anordnung nach Anspruch 4, **dadurch gekennzeichnet, dass** der Spalt (11) zwischen der Hülse (10) und einem Außendurchmesser der Zentrierplatte (7) so ausgelegt ist, dass über den gesamten Temperaturbereich ein Spalt erhalten bleibt.

6. Anordnung nach Anspruch 4 oder 5, **dadurch gekennzeichnet, dass** für den Fall, dass die Zentrierplatte (7) aus Aluminium hergestellt ist, die Hülse (10) als Stahlhülse ausgebildet ist.

7. Anordnung nach Anspruch 4, 5 oder 6, **dadurch gekennzeichnet, dass** die Hülse (10) an ihrem über dem Außendurchmesser der Zentrierplatte (7) vorgesehenen Ende derart umgeformt ist, dass eine Ölauffangrinne (12) gebildet wird, welche der zusätzlichen Schmierölversorgung der Lauffläche zwischen der Hülse (10) und dem Pumpenantriebsrad (4) dient.

## Claims

1. Arrangement of a pump (2) in an automated gearbox, in particular dual clutch gearbox, the pump being arranged axially offset parallel to a drive shaft (3) and a clutch (1) of the gearbox, it being possible for the pump to be driven via a clutch-side, driving pump drive wheel (4) and a driven gearwheel (5) which is arranged on a pump shaft (6), **characterized in that** the clutch-side pump drive wheel (4) is mounted on a centring plate (7) which forms the rear wall of the pump (2).

2. Arrangement according to Claim 1, **characterized in that** the torque is transmitted between the clutch (1) and the clutch-side pump drive wheel (4) via a slotted clutch hub (8), into which at least one driving finger (9) which is attached on the clutch-side pump drive wheel (4) engages.

3. Arrangement according to Claim 1 or 2, **characterized in that** the mounting of the clutch-side pump drive wheel (4) is a sliding mounting.

4. Arrangement according to Claim 3, **characterized in that** a sleeve (10) made from a material which has a lower coefficient of longitudinal expansion than the centring plate is pressed into an internal diameter of the centring plate (7), the sleeve being reshaped in such a way that it concentrically encloses an external diameter of the centring plate (7) at a defined spacing from the outer contour of the centring plate (7), the sliding-bearing gap (13) which is required for the sliding mounting between the rotating clutch-side pump drive wheel (4) and the sleeve (10) remaining constant independently of the temperature on account of the decoupling in terms of thermal expansion.

5. Arrangement according to Claim 4, **characterized in that** the gap (11) between the sleeve (10) and an external diameter of the centring plate (7) is configured in such a way that a gap is maintained over the entire temperature range.

6. Arrangement according to Claim 4 or 5, **characterized in that**, for the case where the centring plate (7) is produced from aluminium, the sleeve (10) is configured as a steel sleeve.

7. Arrangement according to Claim 4, 5 or 6, **characterized in that**, at its end which is provided over the external diameter of the centring plate (7), the sleeve (10) is reshaped in such a way that an oil-catching groove (12) is formed which serves for the additional lubricating-oil supply of the running face between the sleeve (10) and the pump drive wheel (4).

## Revendications

1. Agencement de pompe (2) dans une transmission automatique, notamment une transmission à double embrayage, dans lequel la pompe est disposée parallèlement avec un décalage d'axe par rapport à un arbre d'entraînement (3) et un embrayage (1) de la transmission, la pompe pouvant être entraînée par le biais d'une roue d'entraînement de pompe motrice (4), disposée du côté de l'embrayage et par une roue dentée (5) entraînée, disposée sur un arbre de pompe (6), **caractérisé en ce que** la roue d'entraînement de pompe (4) disposée du côté de l'embrayage est montée sur une plaque de centrage (7) qui forme la paroi arrière de la pompe (2).

2. Agencement selon la revendication 1, **caractérisé en ce que** le transfert de couple entre l'embrayage (1) et la roue d'entraînement de pompe (4) disposée du côté de l'embrayage s'effectue par le biais d'un moyeu d'embrayage fendu (8), dans lequel vient en prise au moins un doigt d'entraînement (9) monté sur la roue d'entraînement de pompe (4) disposée du côté de l'embrayage.

3. Agencement selon la revendication 1 ou 2, **caractérisé en ce que** le support de palier de la roue d'entraînement de pompe (4) disposée du côté de l'embrayage est un support de palier lisse.

4. Agencement selon la revendication 3, **caractérisé en ce qu'**une douille (10) est pressée dans un diamètre intérieur de la plaque de centrage (7), et est constituée d'un matériau qui présente un plus faible coefficient de dilatation longitudinal que la plaque de centrage, la douille étant façonnée de telle sorte qu'elle entoure concentriquement un diamètre extérieur de la plaque de centrage (7) à une certaine distance du contour extérieur de la plaque de centrage (7), la fente du palier lisse (13) nécessaire pour le support de palier lisse entre la roue d'entraînement de pompe (4) on rotation disposée du côté de l'embrayage et la douille (10) restant constante indépendamment de la température sur la base du désaccouplement technique de dilatation thermique.

5. Agencement selon la revendication 4, **caractérisé en ce que** la fente (11) entre la douille (10) et un diamètre extérieur de la plaque de centrage (7) est conçue de telle sorte qu'une fente soit conservée sur toute la plage de température.

6. Agencement selon la revendication 4 ou 5, **caractérisé en ce que** dans le cas où la plaque de centrage (7) est fabriquée en aluminium, la douille (10) est réalisée sous forme de douille d'acier.

7. Agencement selon la revendication 4, 5 ou 6, **caractérisé en ce que** la douille (10) est façonnée à son extrémité prévue sur le diamètre extérieur de la plaque de centrage (7) de telle sorte qu'une rigole de collecte d'huile (12) soit formée, laquelle sert à l'alimentation supplémentaire en huile de lubrification de la surface de roulement entre la douille (10) et la roue d'entraînement de pompe (4).
